(19) **Europäisches Patentamt**

**European Patent Office**

**Office européen des brevets**

(11) Publication number: **0 186 498 B1**

(12) **EUROPEAN PATENT SPECIFICATION**

(45) Date of publication of patent specification: **21.11.91**

(51) Int. Cl.⁵: **C12H 1/00, C12H 1/14,** C12C 11/04, C12G 1/02, A01N 63/02

(21) Application number: **85309421.7**

(22) Date of filing: **23.12.85**

(54) **Use of nisin to prevent spoilage of alcoholic beverages.**

(30) Priority: **26.12.84 US 686410**

(43) Date of publication of application:
**02.07.86 Bulletin 86/27**

(45) Publication of the grant of the patent:
**21.11.91 Bulletin 91/47**

(84) Designated Contracting States:
**BE DE GB NL**

(56) References cited:
**GB-A- 713 251**
**GB-A- 2 141 016**
**US-A- 2 798 811**

**FSTA, ref. 77031293, 1976; & CS-B-172 045 (P. HANULA et al.)**

**JOURNAL OF DAIRY SCIENCE, vol. 47, 1964, pages 8-12, Columbus, US; B. HEINEMANN et al.: "Use of Nisin in preparing beverage-quality sterile chocolate-flavored milk"**

(73) Proprietor: **APLIN & BARRETT LTD.**
**15 North Street**
**Beaminster Dorset. DT8 3DZ(GB)**

(72) Inventor: **Tubb, Roy S.**
**Arden Cottage Keepers Corner**
**Burstow Horley Surrey. RH6 9RP(GB)**
Inventor: **Ogden, Keith**
**141 Heath Way**
**Horsham West. Sussex. RH12 4XX(GB)**

(74) Representative: **Arthur, Bryan Edward et al**
**Withers & Rogers 4 Dyer's Buildings Holborn**
**London EC1N 2JT(GB)**

## Description

BACKGROUND OF THE INVENTION

Nisin, an antimicrobial substance produced by certain strains of *Sreptococcus lactis*, has known food preservative use. It has the property of inhibiting the growth of certain gram-positive bacteria, but not gram-negative ones or yeasts or molds. A classic use has been for the prevention of clostridial spoilage in process cheese products. Nisin is a polypeptide of 34 amino acid residues and a molecular size of 3510 daltons. It has been described as both an antibiotic and a bacteriocin. Nisin contains five internal di-sulfide bridges making it very stable to heat under acid conditions, although above pH 7 irreversible inactivation occurs at room temperature. Nisin is most active under acid conditions, acting as a cationic surface-active detergent and an inhibitor of the synthesis of murein, a peptidoglycan which is an important component of the cell wall of gram-positive bacteria; Hurst, A., Advances in Applied Microbiology, 1981, 27, 85 and Reisinger et al, Archives of Microbiology, 1980, 127, 187. Nisin (marketed as Nisaplin by Aplin and Barrett Ltd., Trowbridge, Wiltshire) is internationally accepted as a food preservative.

The use of Nisin in process cheese products has been the subject of earlier patents; see British Patent 713,251 and U.S. Patent 2,744,827 dated 1954 and 1956, respectively. These patents relate to the manufacture or preservation of cheese of kinds liable to become blown or distended due to the growth of spoilage organisms which are anaerobic sporeformers, typically bacteria known as *Clostridia*. They also relate to process cheese which is liable to be spoiled as above. The levels of Nisin referred to in these patents are in the range of 50 to 375 units per gram. One "unit" is equivalent to 1 International Unit (I.U.) of Nisin activity and is equivalent to 0.025 microgram of Nisin.

Use of Nisin as an antibotulinal agent by inhibiting the outgrowth of germinated *Clostridium botulinum* spores in food products in general and high moisture process cheese products in particular is the subject of United States patent applications Serial No. 503,305 filed June 10, 1983, Serial No. 543,968 filed October 20, 1983 and Serial No. 585,864 filed March 2, 1984, all in the name of Steven L. Taylor.

Beer is a rather hostile environment for bacterial growth and, consequently, spoilage of beers is limited to only a few species of bacteria. Hough et al, Malting and Brewing Science, 2nd Edition, Volume 2, London, Chapman & Hall, 1983, Chapter 21 and Ingledew, Journal of American Society of Brewing Chemists, 1979, 37, 145. However, beer-spoilage problems do arise, and ways in which the biological stability of beers can be improved are of interest to the brewing industry. The apparent resistance of some beers to bacterial spoilage has been tentatively attributed to metabolites produced by the yeast strain used in fermentation. The identification and availability of the co-produced, or other acceptable antibacterial agents, would provide the means to inhibit growth of spoilage bacteria during the brewing process or in beer. The use of zymocins active against the wild-yeasts encountered in brewing has been reported, Young et al, Proceedings of the European Brewery Convention, Berlin (West), 1979, 817, and the genetic construction of brewing strains able, themselves, to produce a zymocin during fermentation has been described.

Lactic acid bacteria (Lactobacilli and Pediococci) are attributed by the literature to be the major causes of spoilage in unpasteurized beers and give rise to the greatest proportion of infections during fermentation. Czechoslovak patent 172045 describes the stabilizing of wine by adding nisin to a must after pressing. However, wine is not pasteurised and therefore problems associated with pasteurisation are not encountered in the making of wine.

The present invention comprises the use, in the manufacture or storage of beer, of nisin or a nisin-producing culture to inhibit beer spoilage organisms, the nisin or nisin culture being added prior to pasteurisation, or in a solution to wash pitching yeast to render the yeast suitable for re-use in the brewing process, or in a solution as a cleansing rinse for production equipment and plant. The amount of nisin added to beer may be from 0.25 to 2.5 micrograms per litre.

DETAILED DESCRIPTION OF THE INVENTION

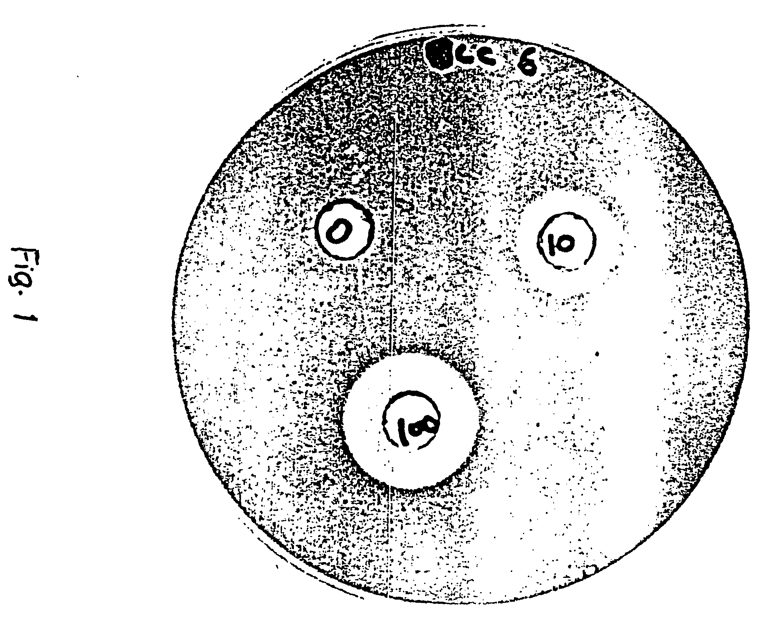

FIGURE 1 illustrates the inhibition zones produced by 0, 10, and 100 units of Nisin when assayed, using a well-test method, against a Lactobacillus sp. BSO 375 (LC6), a sensitive beer-spoilage strain of bacteria, seeded in a lawn of MRS agar.

A number of antibiotics are used as food preservatives (see Chichester et al, Handbook of Food Additives Ed. T.E. Furia, Cleveland, Ohio, C.R.C. Press, 1972, Chapter 3) and the preservation of packaged beers with antibiotics has been considered previously (Strandskov et al, Proceedings of the Annual Meeting of the American Society of Brewing Chemists, 1958, 5). Their use has not become an approved practice, however, for several reasons: (i) the development of antibiotic-resistant strains of pathenogenic bacteria might be encouraged, (ii) allergic reactions to the consumer might result, (iii) the microbial ecology of the intestinal system could be disturbed, or (iv) the antibiotic might be toxic at the levels consumed. However, Nisin has no medical value, per se, and resistance to Nisin is not linked to other medically-important antibiotic resistances; Nisin, being a polypeptide is destroyed in the gastro-intestinal tract and has no known toxicity.

The use of Nisin to combat beer spoilage can be considered in a number of possible ways. It is found that Nisin has a negligible effect on beer characteristics, e.g., aroma, flavor, appearance and physical stability, thus may have application to increase the shelf-life of unpasteurized, cask- or bottle-conditioned beers. Since it is heat stable at beer pH, there is the option of adding it to beers before pasteurization, thereby providing the opportunity to reduce the time and temperature of treatment. Nisin appears not to affect the growth of brewing yeasts, which means that it could be added to fermentations without altering yeast performance. It could be used as an additive to worts, reducing the chances of spoilage arising due to lactic acid bacteria. If added at either of these stages, Nisin survives the fermentation and is carried through into the final beer. Alternatively, Nisin could be used as a palliative measure being used when required to treat only those fermentations or beers that are found to contain lactic acid bacteria.

A Nisin solution may be used as a cleansing rinse for production equipment and plant or to wash pitching yeast to render the yeast suitable for re-use in the brewing process. At present, contaminated pitching yeast is either replaced by freshly propagated yeast or is acid washed to remove the bacteria, however in some cases acid washing markedly reduces yeast viability and alters the ability of the yeast to ferment and flocculate during the fermentation which follows treatment.

The brewing of beer is used as a specific example of the application of Nisin, however its use is not limited to breweries. Lactic acid bacteria obtained as known contaminants from malt whisky distillery fermentations are also found to be sensitive to Nisin. Therefore its use can be considered an aid to eliminating or exerting a measure of control over these bacteria.

Strains and Growth Conditions: Eight strains, identified as *Lactobacilli* using the API 50CH system, were fresh isolates from a British brewery. The 3 strains of *Streptococcus* and 6 of the 8 strains of *Leuconostoc*, were obtained as type strains from the National Collection of Industrial Bacteria (NCIB), the National Collection of Type Culture (NCTC) or the National Collection of Dairy Organisms (NCDO), all in the United Kingdom. Five strains of lactobacilli, isolated from malt whisky fermentations were provided by Pentlands Scotch Whisky Research Ltd, Edinburgh, U.K. All other strains were taken from the Brewing Research Foundation's beer-spoilage organism (BSO) collection (Redhill, Surrey, U.K.), having been isolated originally from beers or breweries around the world. Strains were classified on entering the BSO collection according to Bergey and stored as freeze-dried ampoules. Brewing yeasts were obtained from the National Collection of Yeast Cultures (NCYC, Colney Lane, Norwich, U.K.).

Working cultures were grown either in broth culture (10 ml) or, alternatively, on medium solidified with 2.0% (w/v) agar, and stored at 0-4°C. For gram-positive strains of bacteria (*Lactobacillus, Pediococcus, Leuconostoc, Micrococcus,* and *Streptococcus*) MRS medium (Oxoid) was used, while gram-negative strains were maintained either in MacConkey (Oxoid; *Citrobacter, Enterobacter, Klebsiella* and *Hafnia*) or in WL nutrient medium (Oxoid; *Acetobacter, Zymomonas, Flavobacter* and *Kluyvera*). Brewing yeasts were maintained in YM broth (Difco). All media were prepared following the manufacturer's instructions.

Assay for Nisin Sensitivity: Strains were propagated as broth cultures (10 ml) in screw-capped McCartney bottles at 25°C for 2 days. Cultures of strains requiring "aerobic" conditions were agitated continuously on a reciprocal action shaker (100 cycles min$^{-1}$); others were kept stationary. A portion (200 $\mu$l) of each broth culture was mixed with 20 ml of the required medium, containing agar and kept molten at 48-50°C, and poured into petri dishes. To aid the diffusion of Nisin into the agar (Trammer et al, Journal of the Science of Food and Agriculture, 1964, 8, 522), with MacConkey, WL and YM media, 1 ml of 50:50 mix of Tween 20 and sterile water, at 48-50°C, was added per 100 ml of medium before pouring. With MRS medium this was not necessary as it contains 0.1% Tween 80. Samples (100 $\mu$l) of sterile water containing 0, 10, or 100 units of Nisin (Aplin and Barrett Ltd.; 30,000 units mg$^{-1}$) were added to wells of 1 cm diameter cut into the agar. Plates were incubated at 25°C for 2-3 days, after which time Nisin sensitivity could be observed as a zone of growth inhibition surrounding those wells containing Nisin.

Table 1 illustrates the sensitivity to Nisin of brewing/distillery contaminants and beer spoilage bacteria. Of these species the first 5 are gram-positive and the remaining are gram-negative.

A total of 154 strains of bacteria, mostly beer-spoilage organisms, considered to be representative and belonging to 13 genera were assayed for their sensitivity to Nisin; 122 of these were gram-positive and 32 were gram-negative strains. The results, show the various responses obtained. Of the gram-positive strains tested, predominantly *Lactobacilli* and *Pediococci*, 113 strains (i.e., 93%) were Nisin-sensitive. Some were only weakly sensitive, but the majority (65%) were sensitive or very sensitive, showing inhibition zone >0.5 cm diameter around wells containing 100 units of Nisin. None of the five distillery isolates were resistant to Nisin.

Of the gram-negative strains only the three belonging to the genus *Flavobacter* were Nisin-sensitive. Of the remaining 29 strains belonging to 7 genera, none showed zones of growth inhibition. When assaying these strains, a gram-positive strain, known to be Nisin-sensitive, was included as a control in each case. Although this strain (BSO 375) grew only poorly on the media used (MacConkey and WL nutrient media), growth was sufficient to show zones of inhibition, confirming that the Nisin did diffuse into the agar. These results confirm that Nisin is an inhibitor of a wide range of gram-positive strains but not of gram-negative strains. The inhibition of the *Flavobacter* strains was unexpected.

Twelve strains of brewing yeast, 8 ale and 4 lager, were assayed for Nisin-sensitivity. None of these strains were inhibited by Nisin. This observation gives rise to the conclusion that Nisin could be used in the presence of brewer's yeasts to prevent or reduce spoilage, without adversely affecting yeast growth or fermentation performance.

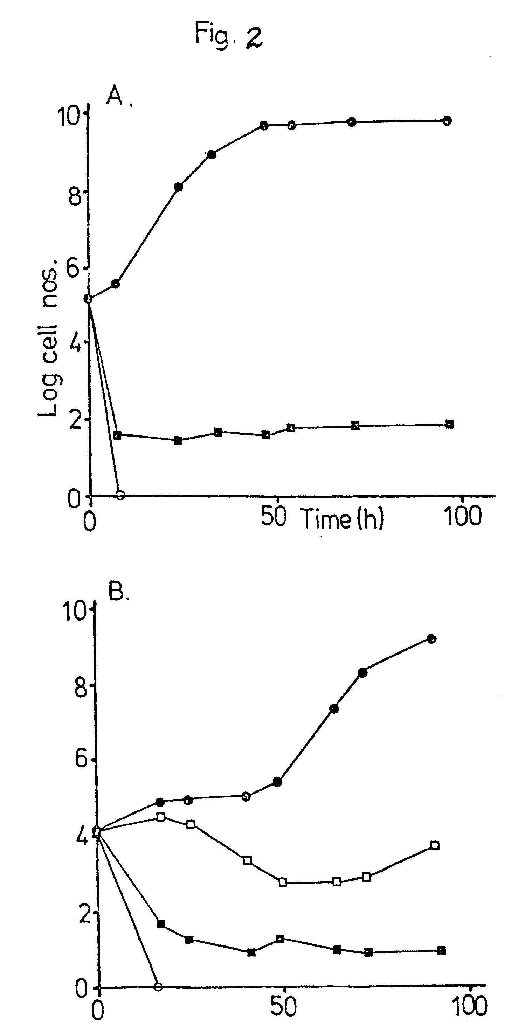

The effectiveness of Nisin at levels compatible with its practical use in wort and beer have been verified in MRS broth inoculated at different levels with sensitive beer spoilage strain of Lactobacillus. 100 units ml$^{-1}$ of Nisin completely inhibited growth of ca. 10$^5$ cells ml$^{-1}$ at 20$^\circ$C under anaerobic conditions. All the bacterial cells were killed in less than 10h (FIGURE 2A).

## TABLE I

| Genus | No. of strains tested | No. of resistant strains | No. of sensitive stains | | | Total No. of sensitive strains |
|---|---|---|---|---|---|---|
| | | | W.S. | S. | V.S. | |
| Lactobacillus | 57 | 6 | 16 | 32 | 3 | 51 |
| Pediococcus | 37 | 1 | 13 | 18 | 5 | 36 |
| Micrococcus | 12 | 2 | 1 | 8 | 1 | 10 |
| Leuconostoc | 8 | 0 | 2 | 6 | 0 | 8 |
| Streptococcus | 3 | 0 | 1 | 2 | 0 | 3 |
| Acetobacter | 10 | 10 | 0 | 0 | 0 | 0 |
| Zymomonas | 8 | 8 | 0 | 0 | 0 | 0 |
| Flavobacter | 3 | 0 | 3 | 0 | 0 | 3 |
| Kluyvera | 1 | 1 | 0 | 0 | 0 | 0 |
| Citrobacter | 3 | 3 | 0 | 0 | 0 | 0 |
| Enterobacter | 2 | 2 | 0 | 0 | 0 | 0 |
| Klebsiella | 3 | 3 | 0 | 0 | 0 | 0 |
| Hafnia | 2 | 2 | 0 | 0 | 0 | 0 |

W.S. — "weak sensitive" - an inhibition zone of diameter 0.5 cm or less surrounding a well containing 100 units of Nisin.

S. — "sensitive" - an inhibition zone of diameter 0.5-1.0 cm surrounding a well containing 100 units of Nisin.

V.S. — "very sensitive" - an inhibition zone of greater than 1.0 cm surrounding a well containing 100 units of Nisin and/or an inhibition zone of greater than 0.5 cm surrounding a well containing 10 units of Nisin.

Similarly, when the inoculum was -$10^3$ cells Ml$^{-1}$, growth was inhibited by 10 units ml$^{-1}$ of Nisin (FIGURE 2c). Even 1 unit ml$^{-1}$ of Nisin had a significant effect in reducing the rate of growth when the inoculum was -$10^4$ cells ml$^{-1}$ (FIGURE 2b).

Moreover, 100 units ml$^{-1}$ completely inhibited growth in MRS broth of $10^4$ cells ml$^{-1}$ of a strain of lactobacillus classified as Nisin resistant using the well test assay (FIGURE 2D).

It is known that the stability and activity of Nisin ubcreases with increasing acidity (Hurst, A., 1981, Adv. Appl. Microbiol. 27, pp. 85-123). Both wort (~pH 5) and beer (~pH4) are more acidic media than MRS broth (pH 6.2). Since both wort and beer are more acidic, Nisin at 100 units ml$^{-1}$ should inhibit the growth of at least $10^5$ lactic acid bacterial cells ml$^{-1}$. Such numbers of bacteria represent a massive infection, and are well above those which readily produce detectable spoilage characteristics in beer; it is reported that 20,000 *Pediococci* ml⁻¹ are sufficient to spoil beer.

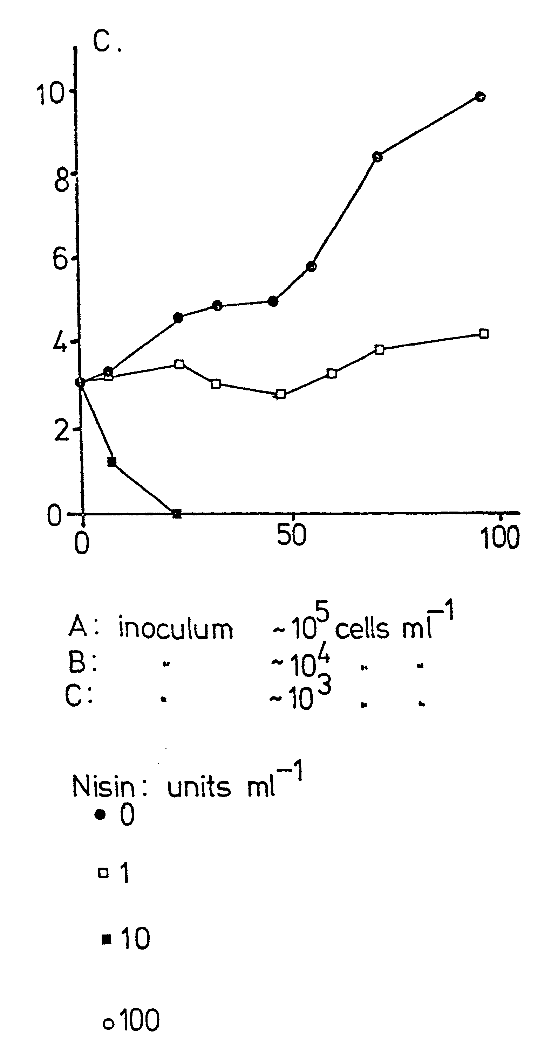

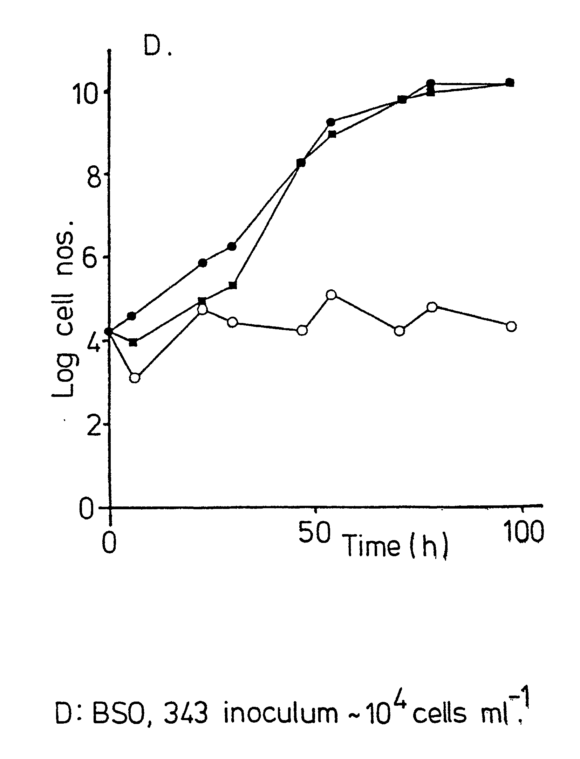

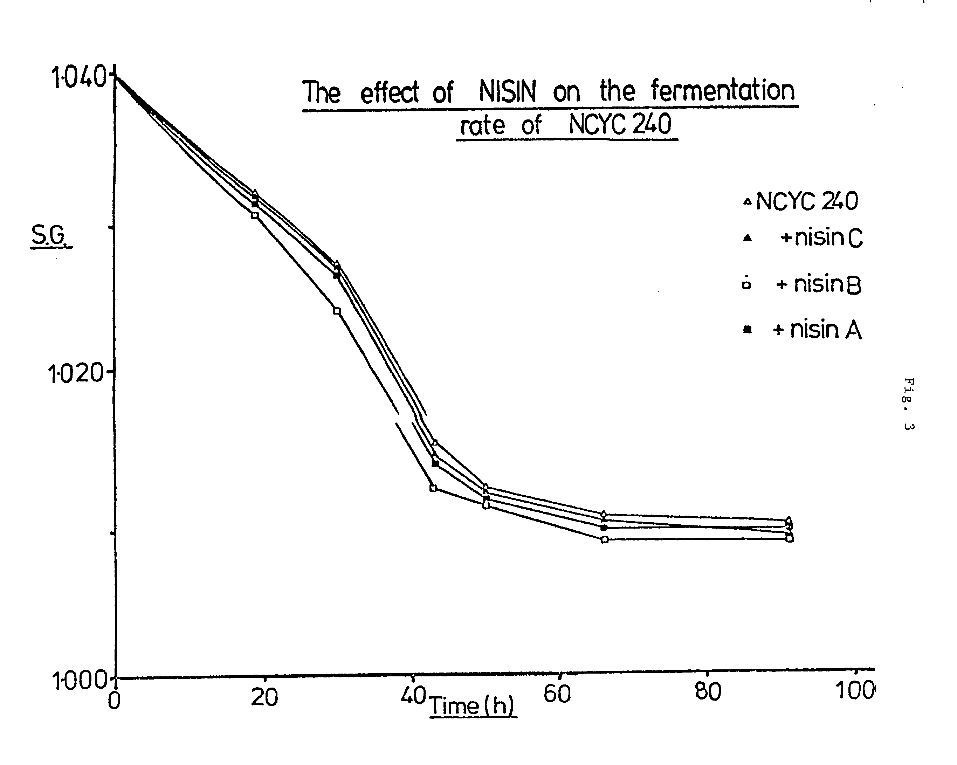

Addition of Nisin to Fermentations: Three different preparations (1000 i.u. mg⁻¹, 2500 i.u. mg⁻¹, and 44,000 i.u. mg⁻¹) were added in the amount required to give a final level of approximately 100 i.u. ml⁻¹ to pilot brewery (~27 liters) wort fermentations with ale yeast, NCYC 240. These additions had little effect on the fermentation performance of the brewing yeast as shown in FIGURE 3. Similar results, using tall tube fermenters (1.5 liters), were obtained for four other brewing yeast strains - NCYC 1062, 1123, 1236, and 1245.

Nisin added to the fermentation stage is present in the final beer with no measurable loss of activity. Therefore Nisin is neither adsorbed nor degraded by brewing yeasts, and survives both filtration and pasteurization. None of the Nisin preparations appear to confer any obvious detrimental characteristics on beer-flavor.

Addition of Nisin to Packaged Products: The risks of spoilage of cask- and bottle-conditioned beers, which are not pasteurized, could be reduced by the addition of Nisin. Also, since Nisin is unaffected by pasteurization, there is the option of adding it to beers before pasteurization, possibly allowing reduced pasteurization regimes to be operated.

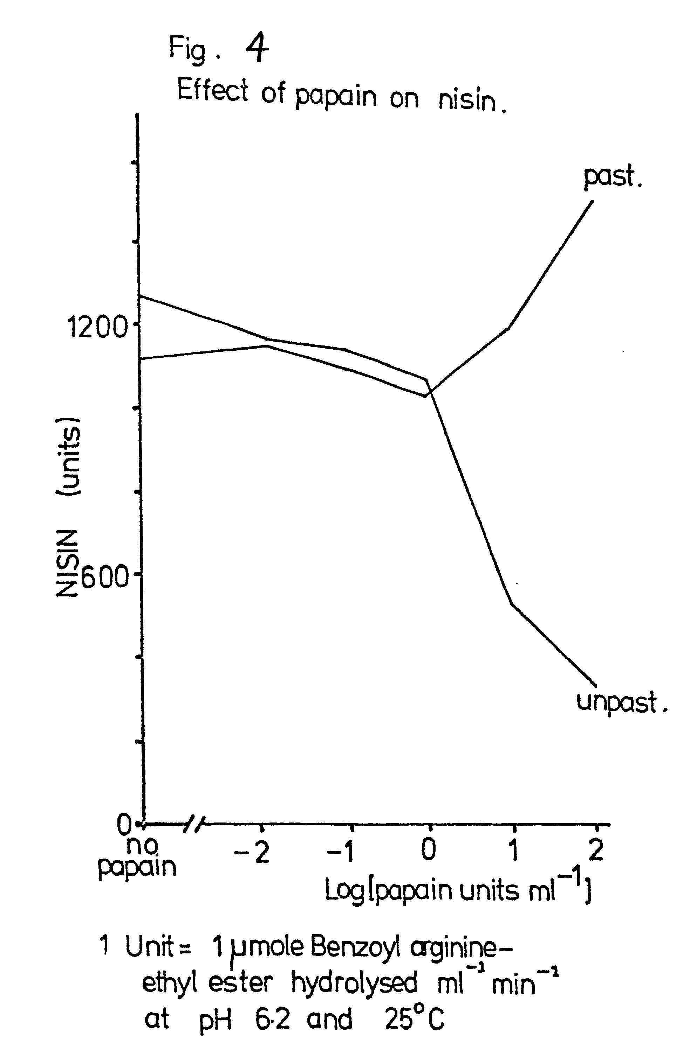

Papain, a non-specific proteolytic enzyme, is added to many beers to stabilize them against haze formation. It will cleave peptide bonds linking a variety of amino acids, as long as those amino acids are in the L-configuration. At least six amino acids are required to fill the enzymes "active site". Consequently, due to the five-ring structure of Nisin, papain can only attack the six amino acids at the C-terminal of the molecule. Alpha-chymotrypsin inactivates Nisin by cleaving a tripeptide from the C-terminal of the bacteriocin. Therefore, it was possible that papain would inactive Nisin in beers. However, it was found that papain reduced the levels of Nisin activity only when the enzyme was present in concentrations approximately 100-fold those used in practice; see FIGURE 4. Nisin is more stable to high temperatures than papain. Consequently, Nisin activity was not reduced by papain when they were added together and then pasteurized. On the contrary, at high papain concentrations, an increase in Nisin activity was seen.

The Uses of Nisin in Wines, Cider and Distilled Beverages: Nisin appears to lend itself to the control of infection in distilleries where lactic acid bacteria can be a major contamination problem. In whisky production, it is thought that some of the final flavor characteristics arise from the presence of lactic acid bacteria in the fermentation. Therefore, Nisin might be used to restrict bacterial growth rather than totally remove bacteria from the yeast fermentation. For example, it should be possible to devise a situation where a desirable *Lactobacillus* strain is more resistant to Nisin than undesirable contaminants.

A similar approach could be used to control or prevent the conversion of malate to lactate (malolactic fermentation) during production of wine or cider.

## Claims

1. The use, in the manufacture or storage of beer, of nisin or a nisin-producing culture to inhibit beer spoilage organisms, the nisin or nisin culture being added prior to pasteurisation, or in a solution to wash pitching yeast to render the yeast suitable for re-use in the brewing process, or in a solution as a cleansing rinse for production equipment and plant.

2. Use according to claim 1, wherein the amount of nisin added to the beer is from 0.25 to 2.5 micrograms per millilitre.

3. Use according to claim 1 or 2, in which papain is also added to the beer.

## Revendications

1. Utilisation, dans la production ou la conservation de la bière, de la nisine ou d'une culture produisant de la nisine pour inhiber les organismes altérant la bière, la nisine ou culture de nisine étant ajoutée avant la pasteurisation, ou dans une solution pour laver le levain afin de rendre la levure propre à une nouvelle utilisation dans le processus de brassage, ou dans une solution comme bain de rinçage nettoyant pour l'équipement et l'atelier de production.

2. Utilisation suivant la revendication 1, dans laquelle la quantité de nisine ajoutée à la bière est de 0,25 à 2,5 microgrammes par ml.

3. Utilisation suivant la revendication 1 ou 2, dans laquelle de la papaïne est ajoutée aussi à la bière.

**Patentansprüche**

1. Verwendung von Nisin oder einer Nisin produzierenden Kultur bei der Herstellung oder Lagerung von Bier, um Organismen, die das Bier verderben, zu inhibieren, wobei das Nisin oder die Nisin-Kultur vor dem Pasteurisieren zugegeben werden, oder in einer Lösung zum Waschen angestellter Hefe verwendet werden, um die Hefe zur Wiederverwendung im Brauverfahren brauchbar zu machen, oder in einer Lösung als Spülmittel für die Produktionsgeräte und -anlage verwendet werden.

2. Verwendung nach Anspruch 1, bei der die dem Bier zugegebene Menge Nisin 0,25 bis 2,5 Mikrogramm pro Milliliter beträgt.

3. Verwendung nach den Ansprüchen 1 oder 2, wobei dem Bier ferner Papain zugegeben wird.

Fig. 1

## Fig. 2

A.

B.

C.

A: inoculum   ~$10^5$ cells ml$^{-1}$
B:     "       ~$10^4$  "    "
C:     "       ~$10^3$  "    "

Nisin: units ml$^{-1}$
● 0
□ 1
▪ 10
○ 100

D: BSO, 343 inoculum $\sim 10^4$ cells $ml^{-1}$.

Fig. 3

The effect of NISIN on the fermentation rate of NCYC 240

Fig . 4

Effect of papain on nisin.

1 Unit = 1 μmole Benzoyl arginine-
ethyl ester hydrolysed $ml^{-1} min^{-1}$
at pH 6·2 and 25°C